# EUROPEAN PATENT SPECIFICATION

(11) **EP 3 309 436 B1**
(45) Date of publication and mention of the grant of the patent: **15.04.2020**
(21) Application number: 17195106.4
(22) Date of filing: 06.10.2017
(51) Int. Cl.: F16K 31/54, F16K 31/04

(54) **ACTUATOR LINKAGE ASSEMBLY**
AKTUATORVERBINDUNGSBAUGRUPPE
ENSEMBLE DE LIAISON D'ACTIONNEUR

(30) Priority: 14.10.2016 SE 1651351
(43) Date of publication of application: 18.04.2018
(73) Proprietor: Nordhydraulic AB, 872 24 Kramfors (SE)
(72) Inventor: LUNDGREN, Bertil, 872 96 BJÄRTRÅ (SE)
(74) Representative: Brann AB

(56) References cited:
- EP-A1- 0 354 087
- US-A- 4 836 497
- US-A- 6 095 485
- US-A1- 2008 035 869

## Description

### Technical Field

The present invention relates to an actuator linkage assembly for a fluid medium valve. The present invention further relates to a valve assembly and a vehicle including the valve assembly.

### Background

A valve assembly may typically include a valve for a fluid medium, such as a hydraulic fluid, an actuator and an actuator linkage assembly. The actuator typically moves a valve spool along a longitudinal axis from a resting position to one or more working positions. When the valve spool is positioned in the working position, the valve is open and fluid medium is typically allowed to flow between a first fluid port and a second fluid port. The valve spool positioned in the resting position typically means that fluid medium is prevented to flow between the first fluid port and the second fluid port. The valve may also allow fluid medium to flow in the resting position and prevent fluid medium to flow in the working position. A valve may comprise a resilient element, such as a spring, arranged to exert a force to the spool thereby acting to force the valve spool towards the resting position or towards the working position depending on configuration. The force needed to move the valve spool from a resting position to a working position varies over time and depends on a number of factors besides the above mentioned force, such as: friction between the valve spool and a valve body, friction between the valve spool and seals, the flow or pressure of the fluid, thermo-shock or expansion of the valve spool due to exposure to hot fluid and impurities or particles in the fluid.

The force needed to move the valve spool from the resting position to the working position or vice versa may momentarily and/or for some limited time exceed the maximum force that the actuator can deliver. A problem with conventional systems using electrical actuators, such as linear motors or stepping motors, is that internal control or protective circuits will then switch the actuator off to avoid damage to the motor. This in turn leads to loss of the ability to position the valve spool via the actuator. Yet another problem with conventional solutions is that the displacement or range required when moving the valve spool from the resting position to the working position may differ from controllable displacement or controllable range of the actuator. This may require complex and expensive adaption of the actuators controllable displacement or available range to the specifications of the valve or vice versa.
Document US4836497 describes a conventional valve actuator mechanism for supplying a selectively adjustable close-off force to an associated valve. The mechanism comprises a means for urging the valve plunger into engagement with the valve seat with a predetermined initial force and resistive means for generating a resistive force such that the close-off force is less than the initial by a predetermined amount. However, the document does not disclose a solution that mitigates loss of the ability to position the valve spool via the actuator.

Document EP0354087 describes a conventional electrohydraulic component for pressure regulation, comprising at least one pressure-reducing valve provided with a moveable valve member, a mechanical device for operating this moveable valve member, and an electrical control member, characterised in that the moveable valve member is a sliding gate subjected, on the one hand, to a working pressure prevailing in a pressure chamber, and to an opposite force applied at least indirectly by an operating bar forming a rack meshing with a pinion driven by an electric motor of the rotary type. However, the document does not disclose a solution that mitigates loss of the ability to position the valve spool via the actuator.

Thus, there is a need for an improved actuator linkage assembly for valves, in particular fluid medium valves.

### Summary

One objective of the present invention is to provide a solution which mitigates or solves the drawbacks and problems of conventional solutions. An "or" in this description and the corresponding claims is to be understood as a mathematical OR which covers "and" and "or", and is not to be understood as an XOR (exclusive OR). The indefinite article "a" in this disclosure and claims is not limited to "one" and can also be understood as "one or more", i.e., plural. The above objectives are solved by the subject matter of the independent claims. Further advantageous implementation forms of the present invention can be found in the dependent claims.

According to a first aspect of the invention, the above mentioned objective is achieved with an actuator linkage assembly for a fluid medium valve comprising linkage means and a first resilient element coupled to the linkage means. The first resilient element is further coupled to a valve spool and the linkage means is coupled to driving means or the first resilient element is further coupled to the driving means and the linkage means is coupled to the valve spool. The first resilient element is configured to exert a first force F₁ to the valve spool along a first longitudinal axis in response to a compression or extension displacement d₁ of the first resilient element caused by a driving force F_{d} received from the driving means. In an embodiment of the first aspect, the first resilient element is configured to exert a first force F₁ to the valve spool directly or via the linkage means.

According to a first implementation form according to the first aspect, the first resilient element comprises a first spring member. The actuator linkage assembly is configured to pre-tension the first spring member to a minimum first force F₁₋ₘᵢₙ. The minimum first force F₁₋ₘᵢₙ is less than a maximum driving force F₁₋ₘₐₓ delivered by the driving means.

According to a second implementation form according to the first implementation form of the first aspect or the first aspect as such, the actuator linkage assembly is configured to limit the compression or extension displacement d₁ of the first resilient element to a first displacement range d₁₋ₘᵢₙ, d₁₋ₘₐₓ. The first displacement range d₁₋ₘᵢₙ, d₁₋ₘₐₓ is greater than a second displacement range dₛₚₒₒₗ₋ₘᵢₙ, dₛₚₒₒₗ₋ₘₐₓ corresponding to a maximum displacement dₛₚₒₒₗ₋ₘₐₓ of the valve spool along said first longitudinal axis from a resting position to a working position.

According to a second implementation form according to the first implementation form of the first aspect, where a displacement dₛₚₒₒₗ of the valve spool along said first longitudinal axis generates a nominal friction force F_{nominal-friction} under nominal operational conditions. The minimum first force F₁₋ₘᵢₙ is configured to be greater than a sum of a maximum second force F₂₋ₘₐₓ, exerted by a second resilient element, and the nominal friction force F_{nominal-friction}.

According to a third implementation form according to the second implementation form of the first aspect, the first resilient element is configured to exert the first force F₁ to an opposite side of the valve spool relative to where the second resilient element exert the second force F₂.

According to a fourth implementation form according to the second implementation form of the first aspect, the first resilient element is configured to exert the first force F₁ to the same side of the valve spool as where the second resilient element exert the second force F₂.

According to a fifth implementation form according to any of the preceding implementation forms of the first aspect or the first aspect as such, the first and first resilient elements, are arranged concentrically around a second longitudinal axis offset parallel to the first longitudinal axis.

According to a sixth implementation form according to any of the preceding implementation forms of the first aspect or the first aspect as such, the compression or extension displacement d₁ of the first resilient element comprises linear displacement.

According to a second aspect of the invention, the above mentioned and other objectives are achieved with a fluid medium valve assembly comprising a fluid medium valve, driving means, and an actuator linkage assembly according to the first aspect. The valve comprises at least first and second fluid ports, a valve spool configured to move along a first longitudinal axis from a resting position to a working position. The valve spool is further configured to open the valve to allow fluid medium to flow between the first and second fluid port, in a working position, and configured to fully close the valve to prevent fluid medium to flow between the first and second fluid port, in a resting position or configured to fully open the valve to allow fluid medium to flow between the first and second fluid port, in a resting position, and configured to close the valve to prevent fluid medium to flow between the first and second fluid port, in a working position. The valve further comprises a second resilient element coupled to a valve body of the valve and coupled to the valve spool. The second resilient element is configured to exert a second force F₂ to the valve spool along a first longitudinal axis in response to a displacement dₛₚₒₒₗ of the valve spool along said first longitudinal axis from a resting position towards a first working position of the valve spool. The driving means are configured to deliver a driving force to the actuator linkage assembly to cause the valve spool to move along the first longitudinal axis from the resting position to the working position. In an embodiment of the second aspect, the driving means comprises a stepping motor or a linear motor.

According to a third aspect of the invention, the above mentioned objective is achieved with a vehicle comprising the valve assembly according to the second aspect, wherein the fluid medium valve assembly of the second aspect being arranged to control flow of at least one fluid medium in the vehicle.

Further applications and advantages of the present invention will be apparent from the following detailed description.

### Brief Description of the Drawings

The appended drawings are intended to clarify and explain different embodiments of the present invention, in which:
Fig. 1 shows a valve assembly having an actuator linkage assembly according to an embodiment of the present invention.
Fig. 2 shows a diagram that schematically describes forces exerted in response to displacement distances according to an embodiment of the present invention.
Fig. 3 shows the displacement of the valve spool and compression or extension displacement of the first resilient element according to an embodiment of the present invention.
Fig. 4 shows how the first and first resilient elements are placed on opposite sides of the spool according to an embodiment of the present invention.
Fig. 5 shows how the first and first resilient elements are placed the same side of the spool according to an embodiment of the present invention.
Fig. 6 shows how the first and first resilient elements are arranged concentrically and offset parallel to the first longitudinal axis according to an embodiment of the present invention.
Fig. 7 shows how the first resilient element is arranged for rotational displacement according to an example not forming part of the claimed invention.
Fig. 8 shows a bottom view of the first resilient element arranged for rotational displacement according to an example not forming part of the claimed invention.
Fig. 9 shows a vehicle comprising the valve assembly according to an embodiment of the present invention.
Fig. 10 shows an example of an application of the valve assembly according to an embodiment of the present invention.

Embodiments of the present disclosure and their advantages are best understood by referring to the detailed description that follows. It should be appreciated that like reference numerals are used to identify like elements illustrated in one or more of the figures.

### Detailed Description

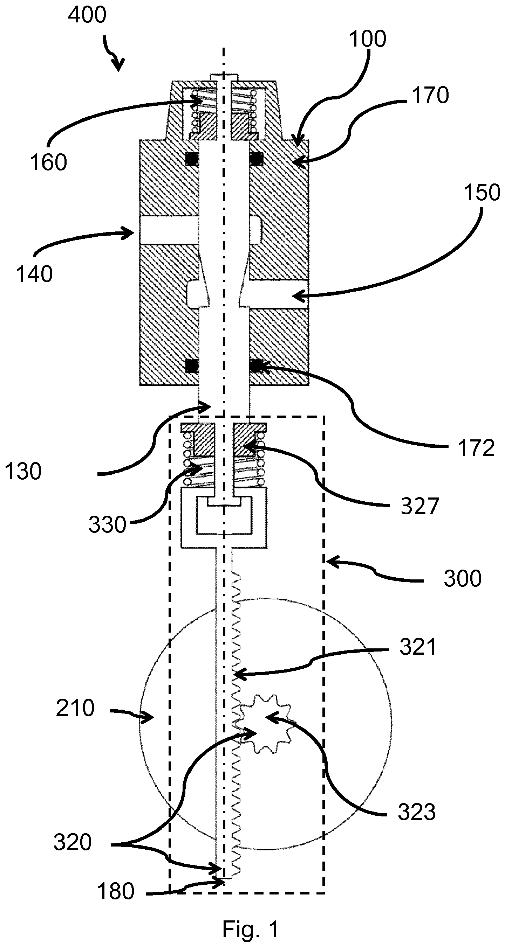

**Fig. 1** shows a valve assembly 400 comprising an actuator linkage assembly 300 according to an embodiment of the present invention. An actuator linkage assembly 300 for a fluid valve 100 is provided that comprises linkage means 320, e.g. in the form of a gear 323 and an actuator rod 321 comprising a rack or a rackrail, and a first resilient element 330 coupled to the linkage means 320. The first resilient element 330 is further coupled to a valve spool 130 and the linkage means 320 may be coupled to driving means 210 or the first resilient element 330 may further be coupled to the driving means 210 and the linkage means 320 is coupled to the valve spool 130. The fluid medium valve 100 may in one example be a hydraulic sliding-spool valve with a valve spool 130 configured to move from a resting position to one or more working positions.

The valve spool 130 is further configured to open the valve 100 to allow fluid medium to flow between a first fluid port 140 of the fluid valve 100 and a second fluid port 150 of the fluid valve 100 in the working position, and configured to fully close the valve 100 to prevent fluid medium to flow between the first fluid port 140 and the second fluid port 150 in the resting position.

The valve spool 130 is further configured to fully open the valve 100 to allow fluid medium to flow between a first fluid port 140 of the fluid valve 100 and a second fluid port 150 of the fluid valve 100 in the resting position, and configured to close the valve 100 to prevent fluid medium to flow between the first fluid port 140 and the second fluid port 150 in the working position.

The valve spool 130 may further be configured to allow fluid medium to flow between a third fluid port and a fourth fluid port in a second working position. In an example of a valve assembly 400 included in a vehicle, the first port may be connected to an hydraulic fluid pump, the second and fourth port to an actuator, such as an hydraulic cylinder and the third port may be connected to a hydraulic fluid reserve or tank.

The fluid valve 100 may contain a valve body 170 configured to accommodate valve spool 130, at least the first and second fluid port 140, 150 and a second resilient element 160. The fluid valve 100 may further comprise one or more seals 172 configured to stop fluid medium from flowing out of the valve body 170. The second resilient element 160 may be coupled to the valve body 170 of the fluid valve 100 and be coupled to the valve spool 130.

The second resilient element 160 is configured to exert a second force F₂ to the valve spool 130 along a first longitudinal axis 180 in response to a displacement dₛₚₒₒₗ of the valve spool 130 along the first longitudinal axis from a resting position towards a first working position of the valve spool 130. In an example, the second resilient element 160 is a spring.

In a further example, the driving means 210 is a stepping motor or a linear motor and the linkage means 320 comprises an actuator gear 323 mounted on the drive shaft of the stepping motor. The actuator gear 323 transfers rotational movement of the stepping motor to linear movement to an actuator rod 321 comprising a rack or a rackrail. The actuator rod 321 may then transfer the linear movement by applying a driving force to a first resilient element 330 thus causing a compression or extension displacement d₁.

In an embodiment, the first resilient element 330 is configured to exert a first force F₁ to the valve spool 130 along the first longitudinal axis 180 in response to a compression or extension displacement d₁ of the first resilient element 330 caused by a driving force F_{d} received from the driving means 210. The first force F₁ may be exerted directly to the valve spool 130 or via the linkage means 320.

In an example, the first force F₁ is applied to the valve spool 130 in order to move the valve spool 130 from a resting position towards one or more working positions or vice versa. In example, when the driving means 210 is trying to move the valve spool 130 in order to move the valve spool 130 from a resting position towards one or more working positions the second resilient element 160 and nominal friction force of the valve will resist the movement of the valve spool 130, thus resulting in a compression or extension displacement d₁ of the first resilient element 330.

The actuator linkage assembly 300 may optionally comprise a connecting member 327 configured to connect the first resilient element 330 or the driving means 210 to the valve spool 130.

An advantage of this embodiment is that protective switching of the driving means 210 can be avoided by ensuring that the first resilient element 330 can absorb movement of the driving means 210, e.g. if the friction force is temporarily high. A further advantage is that both the second force F₂ and the first force F₁ cooperate and is applied in a situation when the valve spool 130 is temporarily stuck and the driving means 210 has returned to a neutral position corresponding to the resting position of the valve spool 130.

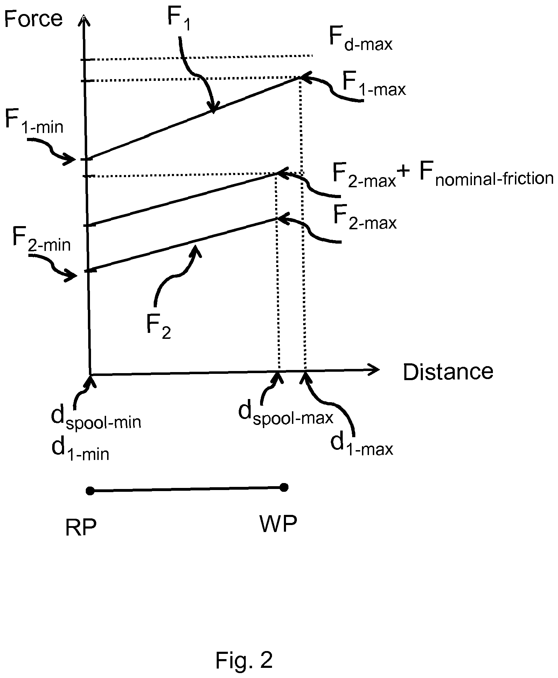

**Fig. 2** shows a diagram that schematically describes forces exerted in response to displacement distances according to an embodiment of the present invention. The diagram illustrates schematically the magnitude of the first and first forces F₁, F₂ in relation to a respective displacement d_{spool,} d₁. The diagram illustrates how the fluid medium valve body 170 is configured to pre-tension the second resilient element 160 to a minimum second force F₂₋ₘᵢₙ and how the actuator linkage assembly is configured to pre-tension the first spring member to a minimum first force F₁₋ₘᵢₙ. The diagram further illustrates how the second force strictly increases from the minimum second force F₂₋ₘᵢₙ to a maximum second force F₂₋ₘₐₓ when the valve spool 130 is displaced dₛₚₒₒₗ from the resting position RP towards the working position WP. The diagram further illustrates how the second force added to the nominal friction force F_{nominal-friction} strictly increases from:
the minimum second force F₂₋ₘᵢₙ + the nominal friction force F_{nominal-friction}
   to a
maximum second force F₂₋ₘₐₓ + the nominal friction force F_{nominal-friction}
when the valve spool 130 is displaced dₛₚₒₒₗ from the resting position RP towards the working position WP. The diagram also illustrates the maximum driving force F_{d-max} delivered by the driving means 210. In an example, the driving means 210 are idle and the valve spool 130 is positioned in the resting position RP, the valve spool 130 then has a minimum spool displacement dₛₚₒₒₗ₋ₘᵢₙ and will, due to the pre-tensioning, initially exert a minimum second force F₂₋ₘᵢₙ to the valve spool 130 if displaced from the resting position RP. The displacement may be due to movement along the first longitudinal axis 180 in any direction when moving the valve spool 130 from the resting position RP towards one or more working positions. In a similar manner the first resilient element 330 will have a minimum compression or extension displacement d₁₋ₘᵢₙ and will, due to the pre-tensioning, initially exert a minimum first force F₁₋ₘᵢₙ if compressed or extended. The diagram further illustrates how the first force F₁ strictly increases from the minimum second force F₁₋ₘᵢₙ to a maximum second force F₁₋ₘₐₓ when the first resilient element 330 is displaced from the minimum compression or extension displacement d₁₋ₘᵢₙ to a maximum compression or extension displacement d₁₋ₘₐₓ of the first resilient element 330.

According to the invention, the actuator linkage assembly 300 is configured to pre-tension the first resilient element 330 to the minimum first force F₁₋ₘᵢₙ. The minimum first force F₁₋ₘᵢₙ is less than the maximum driving force (F_{d-max}) delivered by the driving means 210. According to the invention, the minimum first force F₁₋ₘᵢₙ is greater than a sum of the maximum second force F₂₋ₘₐₓ, exerted by the second resilient element 160, and the nominal friction force F_{nominal-friction}.

An advantage of this embodiment is that protective switching of the driving means 210 can be avoided and the loss of the ability to position the valve spool can be mitigated. This is achieved by ensuring that the minimum first force F₁₋ₘᵢₙ caused by the pre-tension of the first resilient element is less than the maximum driving force F_{d-max} delivered by the driving means 210. Thus the driving means 210 is always capable of compressing the first resilient element 330. By ensuring that the pre-tension is configured to provide the minimum first force F₁₋ₘᵢₙ which is greater than the sum of the maximum second force F₂₋ₘₐₓ, exerted by the second resilient element 160, and the nominal friction force F_{nominal-friction}, the first resilient element is only compressed when the friction force exceeds a nominal value. I.e. the effect is achieved to let the first resilient element 330 act as a rigid element when the friction force of the valve spool is nominal F_{nominal-friction} and to act as a resilient element when the friction force of the valve spool exceed the minimum first force F₁₋ₘᵢₙ. In other words, the first resilient element 330 can absorb movement of the driving means 210, e.g. if the friction force is temporarily high. A further advantage is that both the second force F₂ and the first force F₁ cooperate and is applied in a situation when the valve spool 130 is temporarily stuck and the driving means 210 has returned to a neutral position corresponding to the resting position of the valve spool 130.

In one example, the actuator linkage assembly 300 is configured to pre-tension the first resilient element 330 between the connecting member 327 and the valve spool 130 as previously shown in Fig. 1.

An advantage of this embodiment is that protective switch off by control circuits to the driving means 210 can be avoided by ensuring that the first resilient element 330 can always absorb movement of the driving means 210, e.g. if the friction force is temporarily high.

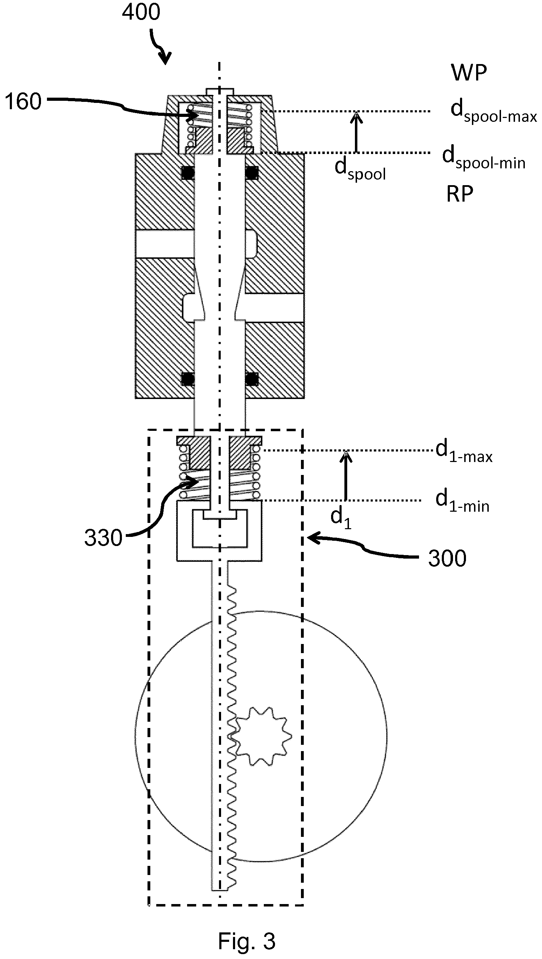

**Fig. 3** shows the displacement of the valve spool and compression or extension displacement of the first resilient element according to an embodiment of the present invention. In yet an embodiment of the invention, the actuator linkage assembly 300 may be configured to limit the compression or extension displacement d₁ of the first resilient element 330 to a first displacement range, d₁₋ₘᵢₙ to d₁₋ₘₐₓ, wherein the first displacement range , d₁₋ₘᵢₙ to d₁₋ₘₐₓ is greater than a second displacement range dₛₚₒₒₗ₋ₘᵢₙ to dₛₚₒₒₗ₋ₘₐₓ corresponding to a maximum displacement from the minimum displacement dₛₚₒₒₗ₋ₘᵢₙ to the maximum displacement dₛₚₒₒₗ₋ₘₐₓ of the valve spool 130 along said first longitudinal axis 180, e.g. from a resting position RP to a working position WP.

In one example, when the current friction force significantly exceeds the nominal friction force, e.g. due to other temporary factors such as change in the flow or pressure of the fluid, thermo-shock or expansion of the valve spool due to exposure to hot fluid and impurities or particles in the fluid. The first resilient element 330 may then be configured to absorb the compression or extension displacement caused by the driving means 210 exerting the driving force, when it is being controlled in its full actuating range.

One advantage of this embodiment is that the maximum displacement or range of the driving means 210 may exceed the maximum displacement or range of the valve spool 130 along the first longitudinal axis 180 and any excess displacement will be absorbed by the first resilient element 330. The risk of the valve 100 not opening fully or of the driving means shutting off due to the fact that the maximum driving force of the driving means is exceeded can thus be reduced or eliminated. A further advantage is that complex and expensive adaption can be eliminated, on the driving means controllable displacement or range to the specifications of the valve or vice versa. Yet an advantage is that existing valves with different second displacement ranges dₛₚₒₒₗ₋ₘᵢₙ to dₛₚₒₒₗ₋ₘₐₓ may be retrofitted with the same actuator linkage assembly 300 and different driving means 210, thus resulting in cheaper production in larger scale and increased compatibility between valves and actuator linkage assemblies.

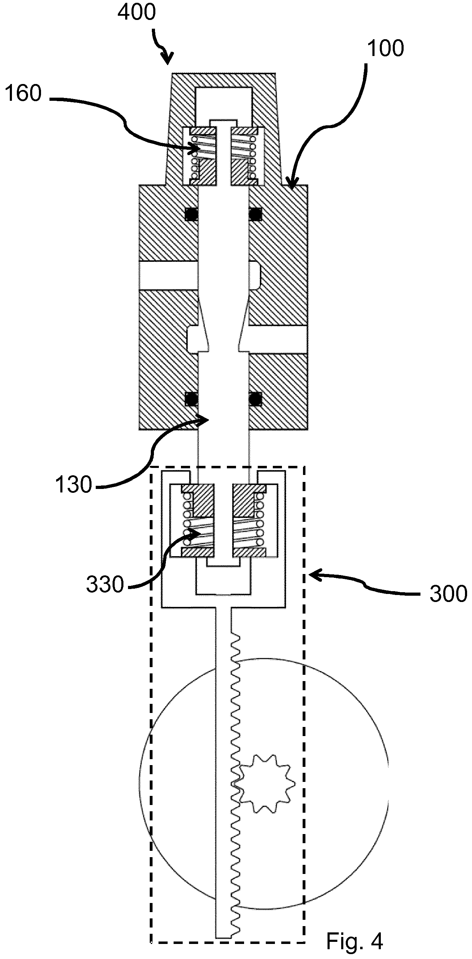

**Fig. 4** shows how the first and first resilient elements 330, 160 are placed on opposite sides of the valve spool 130 according to an embodiment of the present invention. In this embodiment, the first resilient element 330 is configured to exert the first force F₁ to an opposite side of the valve spool 130 relative to where the second resilient element 160 exert the second force F₂.

In an example, the fluid medium valve 100, may be comprised in a vehicle and the valve is retrofitted with the actuator linkage assembly 300 according to the embodiment. An advantage of this embodiment is that the actuator linkage assembly 300 may be retrofitted on existing valves.

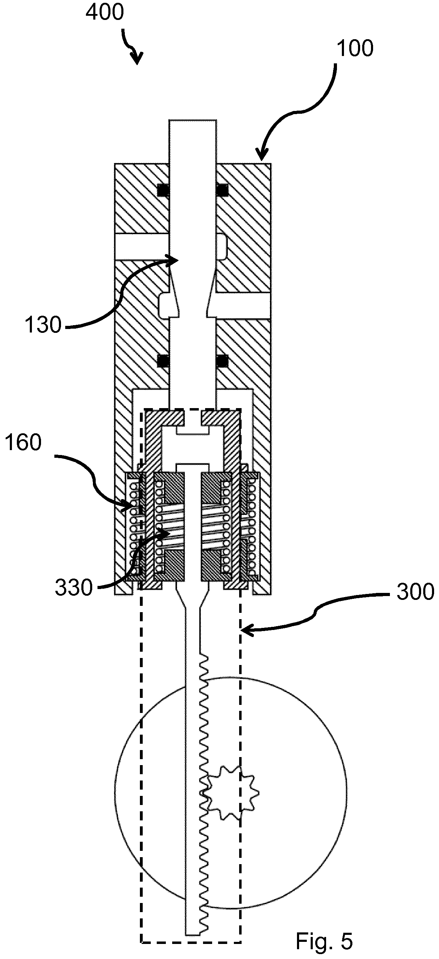

**Fig. 5** shows how the first and first resilient elements 330, 160 are placed on the same side of the valve spool 130 according to an embodiment of the present invention. In this embodiment, the first resilient element 330 is configured to exert the first force F₁ to the same side of the valve spool 130 as where the second resilient element 160 exert the second force F₂.

In an example where other elements may be located or arranged on one side of the valve, the actuator linkage assembly 300 would not fit on the opposite side of the valve.

An advantage of this embodiment is that the space requirement of the valve assembly 400 can be reduced by placing the first and first resilient elements concentrically and on the same side of the spool.

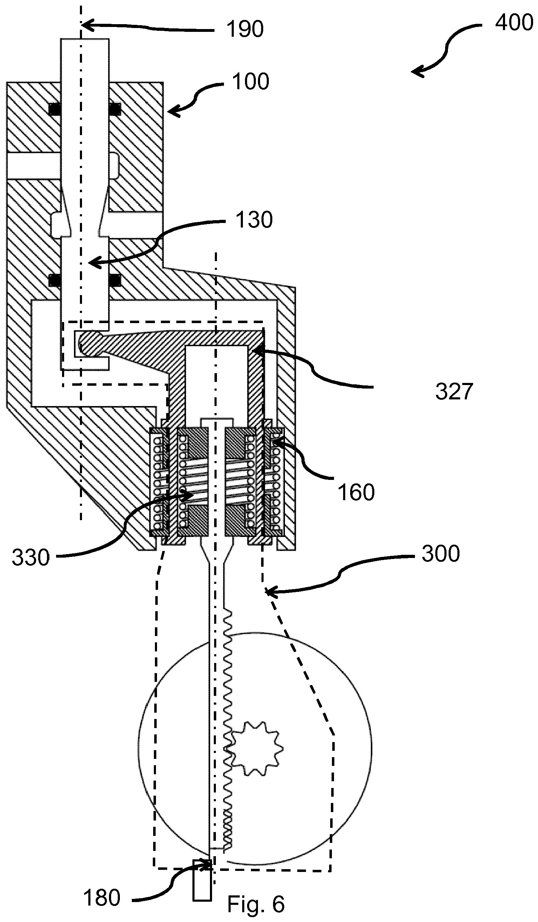

**Fig. 6** shows how the first and first resilient elements are arranged concentrically and offset parallel from the first longitudinal axis according to an embodiment of the present invention. In an embodiment, the first and first resilient elements 160, 330 are arranged concentrically around a second longitudinal axis 190 and offset parallel from the first longitudinal axis 180. In a further embodiment, the actuator linkage assembly 300 further comprises a connecting member. 327 configured to connect the first or second resilient elements 160, 330, in this embodiment arranged concentrically around the second longitudinal axis 190, to the valve spool 130 arranged around the first longitudinal axis 180. The connecting member 327 may be configured to provide a parallel offset from the first longitudinal axis 180 to the second longitudinal axis 190.

In one example, the location of an existing valve 100 does not allow for the extra space required along the first longitudinal axis 180 by the driving means 210 and the actuator linkage assembly 300. One advantage of this embodiment is that the actuator linkage assembly 300 may be retrofitted to more types of existing valves 100.

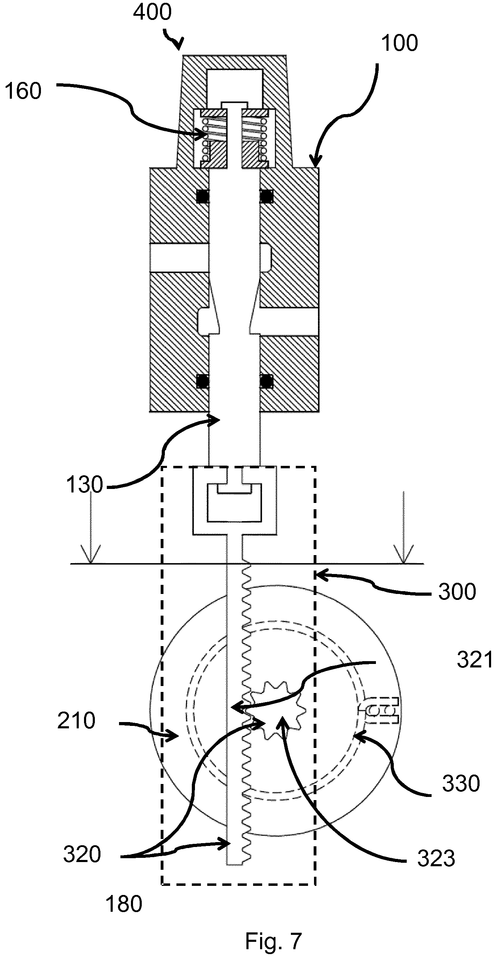

**Fig. 7** shows how the first resilient element 330 is arranged for rotational displacement according to an example. In an example, the first resilient element 330 is further coupled to the driving means 210 and the linkage means 320 is coupled to the valve spool 130 and the linkage means 320 is coupled to driving means 210. In an example, the first resilient element 330 comprises a spring member in the form of a torsion spring or a coiled torsion spring or a tangentially loaded helical spring. In a further example, the compression or extension displacement d₁ of the first resilient element 330 comprises linear displacement or rotational displacement.

In one example, the driving means 210 is configured for rotational movement, e.g. in the form of a stepping motor. The first resilient element 330 is coupled to the driving means 210 and to the linkage means 320, e.g. in the form of a gear 323 and an actuator rod 321 comprising a rack or a rackrail.

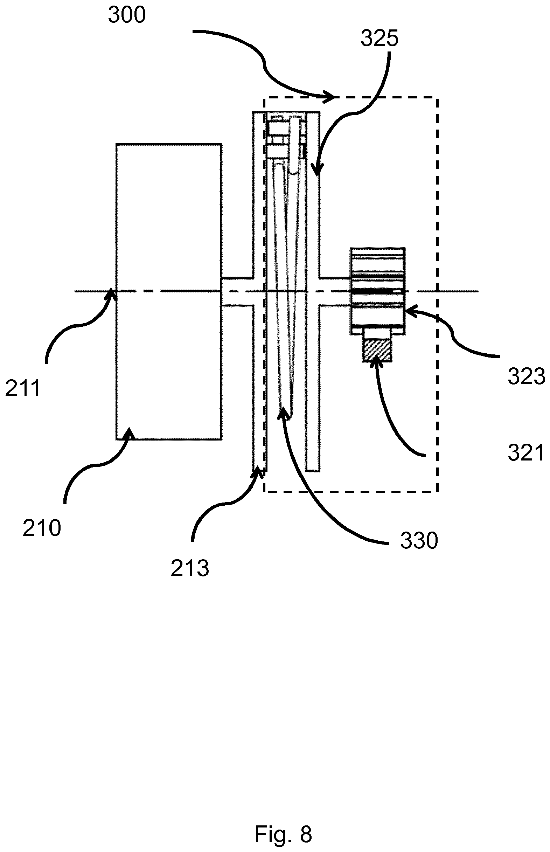

**Fig. 8** shows a bottom view of the first resilient element arranged for rotational displacement according to an example. In an example, the actuator linkage assembly 300 may further comprise a driving disc 213 arranged on the drive shaft of the driving means 210 and is centered around the driving means rotational axis 211. In an example, the actuator linkage assembly 300 may further comprise an actuator disc 325 arranged and centered on the same shaft, e.g. with a shaft bearing, as the gear 323. The first resilient element 330 may be coupled to the driving disc 213 and the actuator disc 325, e.g. by latching onto one or more pegs arranged on the discs 213, 325.

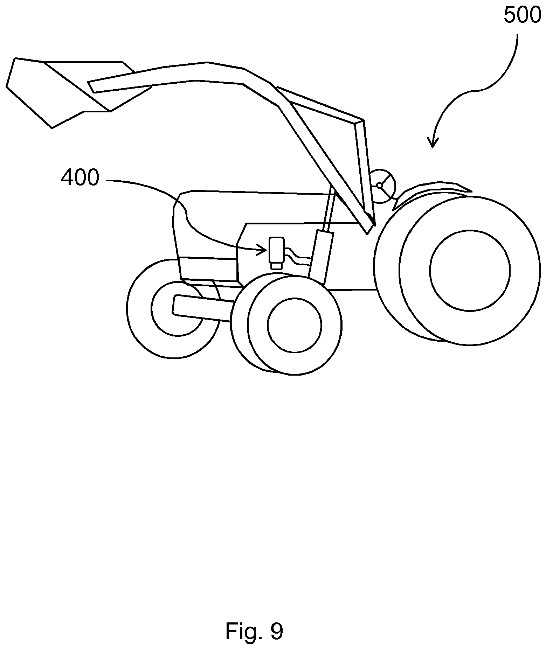

**Fig. 9** shows a motor vehicle equipped with the valve assembly according to an embodiment of the present invention. In this embodiment, the vehicle 500 is provided comprising the valve assembly 400 according to embodiments described herein. The valve assembly 400 may be arranged to control a flow of at least one fluid medium in the vehicle.

In one example, the vehicle 500 may be a front loader that comprises the valve assembly 400 further comprising a sliding-spool valve with a valve spool 130 configured to move from a resting position to one or more working positions. The valve spool 130 may further configured to fully open the valve 100 to allow fluid medium to flow between a first fluid port 140 of the fluid valve 100 and a second fluid port 150 of the fluid valve 100 in the working position, and configured to fully close the valve 100 to prevent fluid medium to flow between the first fluid port 140 and the second fluid port 150 in the resting position.

The valve spool 130 may further be configured to allow fluid medium to flow between a third fluid port and a fourth fluid port in a second working position. In one example of a valve assembly 400 comprised in a vehicle, the first port may be connected to a hydraulic fluid pump, the second and fourth port to an actuator, e.g. a hydraulic cylinder and the third port may be connected to a hydraulic fluid reserve or tank. When the valve spool 130, e.g. in response to a user giving an input signal to the driving means, is moved to a first working position where fluid medium flows from the hydraulic pump via the first fluid port 140 and the second fluid port 150 resulting in that the arm of the front loader is raised. When the valve spool 130, e.g. because a user refrains from giving an input signal to the driving means, remains in the resting position where fluid medium flows is prevented to flow to or from the actuator resulting in that the arm of the front loader is maintained substantially in the same position. When the valve spool 130, e.g. in response to a user giving a reversed input signal to the driving means, is moved to a second working position where fluid medium flows from the hydraulic pump via the fourth and third fluid port resulting in that the arm of the front loader is lowered.

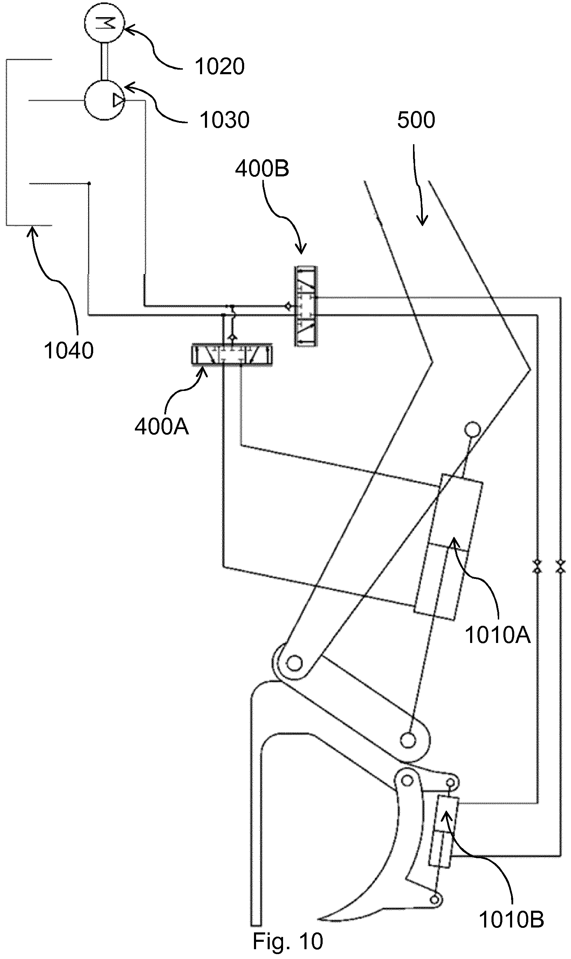

**Fig. 10** shows an example of an application of the valve assembly according to an embodiment of the present invention. In this example, the valve assembly 400 is comprised in a vehicle 500. The valve assembly is comprised in or implemented as a first control valve 400A and a second control valve 400B. The first control valve 400A controls a first actuator 1010A and the second control valve 400B controls a second actuator 1010B. The first actuator 1010A and the second actuator 1010B are typically hydraulic cylinders. As previously described, each control valve may be provided with four ports. The first port may be connected to a hydraulic fluid pump 1030, the hydraulic fluid pump 1030 being powered by the engine 1020 of the vehicle 500. The second and fourth port may be connected to the first and second actuators 1010A, 1010B respectively. The third port may be connected to a hydraulic fluid reserve or tank 1040. When the valve spool of the first actuator 1010A is moved, e.g. in response to a user giving an input signal, to a first working position where fluid medium flows from the hydraulic pump 1030 via the first fluid port and the second fluid port resulting in a tilt of the attached tool, e.g. a log grip as shown in Fig. 10. When the valve spool remains in the resting position, e.g. because a user refrains from giving an input signal, where fluid medium flows is prevented to flow to or from the first actuator 1010A resulting in that the attached tool is maintained substantially in the same position. When the valve spool is moved to a second working position, e.g. in response to a user giving a reversed input signal, where fluid medium flows from the hydraulic pump via the fourth and third fluid port resulting in a tilt in the opposite direction of the attached tool.

In an embodiment of the invention, there is provided a fluid medium valve assembly 400, e.g. for hydraulic fluid. The fluid medium valve assembly 400 may comprise a fluid medium valve 100, driving means 210 and an actuator linkage assembly 300 according to embodiments described herein. The valve 100 may comprise at least a first and a second fluid port 140, 150 a valve spool 130 configured to move along a first longitudinal axis 180 from a resting position to a working position. The valve spool 130 may further be configured to open the valve 100 to allow fluid medium flow between the first and second fluid port 140, 150 in a working position and be configured to fully close the valve 100 to prevent fluid medium to flow between the first and second fluid port 140, 150 in a resting position. The valve spool 130 may further be configured to open the valve 100 to allow fluid medium flow between the first and second fluid port 140, 150 in resting position and be configured to close the valve 100 to prevent fluid medium to flow between the first and second fluid port 140, 150 in a working position. The valve 100 may further comprise a second resilient element 160 coupled to a valve body 170 of the valve 100 and coupled to the valve spool 130, the second resilient element 160 configured to exert a second force F₂ to the valve spool along a first longitudinal axis 180 in response to a displacement dₛₚₒₒₗ of the valve spool 130 along said first longitudinal axis from a resting position towards a first working position of the valve spool 130. The driving means 210 may be configured to deliver a driving force F_{d} to the actuator linkage assembly 300 to cause the valve spool 130 to move along the first longitudinal axis 180 from the resting position to the working position. In an embodiment, the driving means 210 comprises a stepping motor or a linear motor.

Finally, it should be understood that the present invention is not limited to the embodiments described above, but also relates to and incorporates all embodiments within the scope of the appended independent claims.

## Claims

1. A fluid medium valve assembly (400) comprising:
a fluid medium valve (100),
driving means (210), and
an actuator linkage assembly (300), the actuator linkage assembly (300) comprising:
linkage means (320),
a first resilient element (330) coupled to the linkage means (320), wherein the first resilient element (330) is further coupled to a valve spool (130) and the linkage means (320) is coupled to driving means (210) or the first resilient element (330) is further coupled to the driving means (210) and the linkage means (320) is coupled to the valve spool (130),
wherein the first resilient element (330) is configured to exert a first force (F₁) to the valve spool (130) along a first longitudinal axis (180) in response to a compression or extension displacement (d₁) of the first resilient element (330) caused by a driving force (F_{d}) received from the driving means (210),
wherein the first resilient element (330) comprises a first spring member, wherein the actuator linkage assembly (300) is configured to pre-tension the first spring member to a minimum first force (F₁₋ₘᵢₙ), wherein the minimum first force (F₁₋ₘᵢₙ) is less than a maximum driving force (F_{d-max}) delivered by the driving means (210), wherein a displacement (dₛₚₒₒₗ) of the valve spool (130) along said first longitudinal axis (180) generates a nominal friction force (F_{nominal-friction}) under nominal operational conditions, **characterised in that** the minimum first force (F₁₋ₘᵢₙ) is greater than a sum of a maximum second force (F₂₋ₘₐₓ), exerted by a second resilient element (160), and the nominal friction force (F_{nominal-friction}), wherein the actuator linkage assembly (300) is configured to limit the compression or extension displacement (d₁) of the first resilient element (330) to a first displacement range (d₁₋ₘᵢₙ, d₁₋ₘₐₓ), wherein the first displacement range (d₁₋ₘᵢₙ, d₁₋ₘₐₓ) is greater than a second displacement range (dₛₚₒₒₗ₋ₘᵢₙ, dₛₚₒₒₗ₋ₘₐₓ) corresponding to a maximum displacement (dₛₚₒₒₗ₋ₘₐₓ) of the valve spool (130) along said first longitudinal axis from a resting position to a working position,
wherein the valve (100) comprises:
a first and a second fluid ports (140, 150),
the valve spool (130) configured to move along a first longitudinal axis (180) from a resting position to a working position, wherein the valve spool (130) is further configured to fully open the valve to allow fluid medium to flow between the first and second fluid port (140, 150) in the working position, and configured to fully close the valve to prevent fluid medium to flow between the first and second fluid port (140, 150) in the resting position or configured to fully open the valve to allow fluid medium to flow between the first and second fluid port (140, 150) in the resting position, and configured to fully close the valve to prevent fluid medium to flow between the first and second fluid port (140, 150) in the working position, and
the second resilient element (160) coupled to a valve body (170) of the valve (100) and coupled to the valve spool (130), the second resilient element (160) configured to exert the second force (F₂) to the valve spool along a first longitudinal axis (180) in response to a displacement (dₛₚₒₒₗ) of the valve spool (130) along said first longitudinal axis from a resting position towards a first working position of the valve spool (130),
wherein the driving means (210) are configured to deliver a driving force to the actuator linkage assembly (300) to causing the valve spool (130) to move along the first longitudinal axis (180) from the resting position to the working position.

2. The fluid medium valve assembly (400) of claim 1, wherein the driving means (210) comprises a stepping motor and/or a linear motor.

3. The fluid medium valve assembly (400) according to any of claims 1-2, wherein the first resilient element (330) is configured to exert the first force (F₁) to an opposite side of the valve spool (130) relative to where the second resilient element (160) exert the second force (F₂).

4. The fluid medium valve assembly (400) according to any of claims 1-2, wherein the first resilient element (330) is configured to exert the first force (F₁) to the same side of the valve spool (130) as where the second resilient element (160) exert the second force (F₂).

5. The fluid medium valve assembly (400) according to any of the preceding claims, wherein the compression or extension displacement (d₁) of the first resilient element (330) comprises linear displacement.

6. A motor vehicle (500) comprising the valve assembly (400) according to any of claims 1-5, wherein the fluid medium valve assembly (400) is arranged to control flow of at least one fluid medium in the vehicle.

## Patentansprüche

1. Fluidmediumventilanordnung (400), umfassend:
ein Fluidmediumventil (100),
Antriebsmittel (210) und
eine Stellgliedverbindungsanordnung (300), wobei die Stellgliedverbindungsanordnung (300) umfasst:
Verbindungsmittel (320),
ein erstes elastisches Element (330), das an das Verbindungsmittel (320) gekoppelt ist, wobei das erste elastische Element (330) weiter an eine Ventilspule (130) gekoppelt ist und das Verbindungsmittel (320) an Antriebsmittel (210) gekoppelt ist oder das erste elastische Element (330) weiter an das Antriebsmittel (210) gekoppelt ist und das Verbindungsmittel (320) an die Ventilspule (130) gekoppelt ist,
wobei das erste elastische Element (330) konfiguriert ist, eine erste Kraft (F₁) auf die Ventilspule (130) entlang einer ersten Längsachse (180) in Reaktion auf eine Kompressions- oder Ausdehnungsverschiebung (d₁) des ersten elastischen Elements (330) auszuüben, die durch eine Antriebskraft (F_{d}) ausgeübt wird, die von dem Antriebsmittel (210) empfangen wird,
wobei das erste elastische Element (330) ein erstes Federelement umfasst, wobei die Stellgliedverbindungsanordnung (300) konfiguriert ist, das erste Federelement zu einer minimalen ersten Kraft (F₁₋ₘᵢₙ) vorzuspannen, wobei die minimale erste Kraft (F₁₋ₘᵢₙ) kleiner ist als eine maximale Antriebskraft (F_{d-max}), die von dem Antriebsmittel (210) geliefert wird, wobei eine Verschiebung (d_{Spule}) der Ventilspule (130) entlang der ersten Längsachse (180) eine nominelle Reibungskraft (f_{nominelle-Reibung}) unter normalen Betriebsbedingungen erzeugt, **dadurch gekennzeichnet, dass** die minimale erste Kraft (F₁₋ₘᵢₙ) größer ist als eine Summe einer maximalen zweiten Kraft (F₂₋ₘₐₓ), die von einem zweiten elastischen Element (160) ausgeübt wird, und der nominellen Reibungskraft (F_{nominelle-Reibung}), wobei die Stellgliedverbindungsanordnung (300) konfiguriert ist, die Kompressions- oder Ausdehnungsverschiebung (d₁) des ersten elastischen Elements (330) auf einen ersten Verschiebungsbereich (d₁₋ₘᵢₙ, d₁₋ₘₐₓ) zu begrenzen, wobei der erste Verschiebungsbereich (d₁₋ₘᵢₙ, d₁₋ₘₐₓ) größer ist als ein zweiter Verschiebungsbereich (d_{Spule-min}, d_{Spule-max}), entsprechend einer maximalen Verschiebung (d_{Spule-max}) der Ventilspule (130) entlang der ersten Längsachse aus einer Ruheposition zu einer Arbeitsposition,
wobei das Ventil (100) umfasst:
einen ersten und einen zweiten Fluidanschluss (140, 150),
wobei die Ventilspule (130) konfiguriert ist, sich entlang einer ersten Längsachse (180) aus einer Ruheposition zu einer Arbeitsposition zu bewegen, wobei die Ventilspule (130) weiter konfiguriert ist, das Ventil in der Arbeitsposition vollständig zu öffnen, um Fluidmedium zwischen dem ersten und zweiten Fluidanschluss (140, 150) fließen zu lassen, und konfiguriert ist, in der Ruheposition das Ventil vollständig zu schließen, um Fluidmedium daran zu hindern, zwischen dem ersten und zweiten Fluidanschluss (140, 150) zu fließen, oder konfiguriert ist, das Ventil in der Ruheposition vollständig zu öffnen, um Fluidmedium, zwischen dem ersten und zweiten Fluidanschluss (140, 150) fließen zu lassen, und konfiguriert ist, das Ventil in der Arbeitsposition vollständig zu schließen, um Fluidmedium daran zu hindern, zwischen dem ersten und zweiten Fluidanschluss (140, 150) zu fließen, und
das zweite elastische Element (160) an einen Ventilkörper (170) des Ventils (100) gekoppelt ist und an die Ventilspule (130) gekoppelt ist, wobei das zweite elastische Element (160) konfiguriert ist, die zweite Kraft (F₂) auf die Ventilspule entlang einer ersten Längsachse (180) in Reaktion auf eine Verschiebung (d_{Spule}) der Ventilspule (130) entlang der ersten Längsachse aus einer Ruheposition zu einer ersten Arbeitsposition der Ventilspule (130) auszuüben,
wobei die Antriebsmittel (210) konfiguriert sind, eine Antriebskraft an die Stellgliedverbindungsanordnung (300) zu liefern, um die Ventilspule (130) zu veranlassen, sich entlang der ersten Längsachse (180) aus der Ruheposition zu der Arbeitsposition zu bewegen.

2. Fluidmediumventilanordnung (400) nach Anspruch 1, wobei das Antriebsmittel (210) einen Stufenmotor und/oder einen linearen Motor umfasst.

3. Fluidmediumventilanordnung (400) nach einem der Ansprüche 1-2, wobei das erste elastische Element (330) konfiguriert ist, die erste Kraft (F₁) auf eine der Ventilspule (130) gegenüberliegende Seite relativ zu der Stelle auszuüben, wo das zweite elastische Element (160) die zweite Kraft (F₂) ausübt.

4. Fluidmediumventilanordnung (400) nach einem der Ansprüche 1-2, wobei das erste elastische Element (330) konfiguriert ist, die erste Kraft (F₁) auf dieselbe Seite der Ventilspule (130) wie an der Stelle auszuüben, wo das zweite elastische Element (160) die zweite Kraft (F₂) ausübt.

5. Fluidmediumventilanordnung (400) nach einem der vorstehenden Ansprüche, wobei die Kompressions- oder Ausdehnungsverschiebung (d₁) des ersten elastischen Elements (330) eine lineare Verschiebung umfasst.

6. Motorfahrzeug (500), umfassend die Ventilanordnung (400) nach einem der Ansprüche 1-5, wobei die Fluidmediumventilanordnung (400) angeordnet ist, Fluss von mindestens einem Fluidmedium in dem Fahrzeug zu steuern.

## Revendications

1. Ensemble de valve pour milieu fluide (400) comprenant :
une valve pour milieu fluide (100),
des moyens d'entraînement (210), et
un ensemble de liaison d'actionneur (300), l'ensemble de liaison d'actionneur (300) comprenant :
des moyens de liaison (320),
un premier élément résilient (330) couplé aux moyens de liaison (320), dans lequel le premier élément résilient (330) est couplé en outre à un tiroir de valve (130) et les moyens de liaison (320) sont couplés aux moyens d'entraînement (210) ou le premier élément résilient (330) est couplé en outre aux moyens d'entraînement (210) et les moyens de liaison (320) sont couplés au tiroir de valve (130),
dans lequel le premier élément résilient (330) est configuré pour exercer une première force (F₁) sur le tiroir de valve (130) le long d'un premier axe longitudinal (180) en réponse à un déplacement de compression ou d'extension (d₁) du premier élément résilient (330) provoqué par une force d'entraînement (F₁) reçue des moyens d'entraînement (210),
dans lequel le premier élément résilient (330) comprend un premier élément ressort, dans lequel l'ensemble de liaison d'actionneur (300) est configuré pour prétendre le premier élément ressort à une première force minimale (F₁₋ₘᵢₙ), dans lequel la première force minimale (F₁₋ₘᵢₙ) est inférieure à une force d'entraînement maximale (F_{d-max}) délivrée par les moyens d'entraînement (210), dans lequel un déplacement (dₛₚₒₒₗ) du tiroir de valve (130) le long dudit premier axe longitudinal (180) génère une force de frottement nominale (F_{nominal-friction}) sous des conditions opérationnelles nominales, **caractérisé en ce que** la première force minimale (F₁₋ₘᵢₙ) est supérieure à une somme entre une seconde force maximale (F₂₋ₘₐₓ) exercée par un second élément résilient (160), et la force de frottement nominale (F_{nominal-friction}), dans lequel l'ensemble de liaison d'actionneur (300) est configuré pour limiter le déplacement de compression ou d'extension (d₁) du premier élément résilient (330) à une première plage de déplacement (d₁₋ₘᵢₙ, d₁₋ₘₐₓ), dans lequel la première plage de déplacement (d₁₋ₘᵢₙ, d₁₋ₘₐₓ) est supérieure à une seconde plage de déplacement (dₛₚₒₒₗ₋ₘᵢₙ, dₛₚₒₒₗ₋ₘₐₓ) correspondant à un déplacement maximal (dₛₚₒₒₗ₋ₘₐₓ) du tiroir de valve (130) le long dudit premier axe longitudinal depuis une position de repos jusqu'à une position de travail,
dans lequel la valve (100) comprend :
un premier et un second orifices à fluide (140, 150),
le tiroir de valve (130) configuré pour se déplacer le long d'un premier axe longitudinal (180) depuis une position de repos jusqu'à une position de travail, dans lequel le tiroir de valve (130) est configuré en outre pour ouvrir complètement la valve pour permettre à du milieu fluide de s'écouler entre les premier et second orifices à fluide (140, 150) dans la position de travail, et configuré pour fermer complètement la valve pour empêcher du milieu fluide de s'écouler entre les premier et second orifices à fluide (140, 150) dans la position de repos ou configuré pour ouvrir complètement la valve pour permettre à du milieu fluide de s'écouler entre les premier et second orifices à fluide (140, 150) dans la position de repos, et configuré pour fermer complètement la valve pour empêcher du milieu fluide de s'écouler entre les premier et second orifices à fluide (140, 150) dans la position de travail, et
le second élément résilient (160) couplé à un corps de valve (170) de la valve (100) et couplé au tiroir de valve (130), le second élément résilient (160) configuré pour exercer la seconde force (F₂) sur le tiroir de valve le long d'un premier axe longitudinal (180) en réponse à un déplacement (dₛₚₒₒₗ) du tiroir de valve (130) le long dudit premier axe longitudinal depuis une position de repos vers une première position de travail du tiroir de valve (130),
dans lequel les moyens d'entraînement (210) sont configurés pour délivrer une force d'entraînement à l'ensemble de liaison d'actionneur (300) pour amener le tiroir de valve (130) à se déplacer le long du premier axe longitudinal (180) depuis la position de repos jusqu'à la position de travail.

2. Ensemble de valve pour milieu fluide (400) selon la revendication 1, dans lequel les moyens d'entraînement (210) comprennent un moteur pas à pas et/ou un moteur linéaire.

3. Ensemble de valve pour milieu fluide (400) selon l'une quelconque des revendications 1-2, dans lequel le premier élément résilient (330) est configuré pour exercer la première force (F₁) sur un côté opposé du tiroir de valve (130) par rapport à là où le second élément résilient (160) exerce la seconde force (F₂).

4. Ensemble de valve pour milieu fluide (400) selon l'une quelconque des revendications 1-2, dans lequel le premier élément résilient (330) est configuré pour exercer la première force (F₁) sur le même côté du tiroir de valve (130) que là où le second élément résilient (160) exerce la seconde force (F₂).

5. Ensemble de valve pour milieu fluide (400) selon l'une quelconque des revendications précédentes, dans lequel le déplacement de compression ou d'extension (d₁) du premier élément résilient (330) comprend un déplacement linéaire.

6. Véhicule à moteur (500) comprenant l'ensemble de valve (400) selon l'une quelconque des revendications 1-5, dans lequel l'ensemble de valve pour milieu fluide (400) est agencé pour contrôler le flux d'au moins un milieu fluide dans le véhicule.
